# EUROPÄISCHE PATENTSCHRIFT

(11) **EP 1 658 213 B1**
(45) Veröffentlichungstag und Bekanntmachung des Hinweises auf die Patenterteilung: **14.03.2007**
(21) Anmeldenummer: 04766570.8
(22) Anmeldetag: 20.08.2004
(51) Int. Cl.: B60T 13/563, B60T 13/57

(54) **BETÄTIGUNGSEINHEIT FÜR EINE HYDRAULISCHE FAHRZEUGBREMSE**
ACTUATION UNIT FOR A HYDRAULIC VEHICLE BRAKE
UNITE D'ACTIONNEMENT POUR UN SYSTEME DE FREINAGE HYDRAULIQUE DE VEHICULE

(30) Priorität: 20.08.2003 DE 10338855
(43) Veröffentlichungstag der Anmeldung: 24.05.2006
(73) Patentinhaber: Continental Teves AG & Co. oHG, 60488 Frankfurt am Main (DE)
(72) Erfinder: DRUMM, Stefan A., 55291 Saulheim (DE)
(86) Internationale Anmeldenummer: PCT/EP2004/051873
(87) Internationale Veröffentlichungsnummer: WO 2005/019008

(56) Entgegenhaltungen:
- DE-A- 3 641 105

## Beschreibung

Die Erfindung betrifft eine Betätigungseinheit für eine hydraulische Fahrzeugbremsanlage, bestehend aus einem pneumatischen Bremskraftverstärker und einem dem pneumatischen Bremskraftverstärker nachgeschalteten Hauptbremszylinder, wobei der pneumatische Bremskraftverstärker in einem Verstärkergehäuse eine erste bewegliche Wand und eine zweite bewegliche Wand aufweist, die in kraftübertragender Verbindung mit einem Kolben des Hauptbremszylinder steht, wobei die beweglichen Wände einen Arbeitsraum begrenzen, der mit Hilfe einer Steuergruppe evakuierbar oder belüftbar ist, die einen Unterdruckdichtsitz und einen Atmosphärendichtsitz sowie einen mit den Dichtsitzen zusammenwirkenden Ventilkörper aufweist.

Aus der deutschen Offenlegungsschrift DE 36 41 105 A1 ist eine derartige Betätigungseinheit für eine hydraulische Fahrzeugbremsanlage bekannt. Bei der vorbekannten Betätigungseinheit ist ein Unterdruckdichtsitz in einem Steuergehäuse, das eine Steuergruppe aufnimmt, ausgebildet. Das Steuergehäuse ist dabei in einem Verstärkergehäuse verschiebbar abgedichtet geführt. Ein Atmosphärendichtsitz ist mit einem Ventilkolben, der über eine Kolbenstange mit einer Pedalbewegung gekoppelt ist und der im Steuergehäuse verschiebbar geführt ist, einstückig ausgebildet. Eine erste bewegliche Wand ist an einem zylindrischen Bauteil befestigt, das seinerseits der Führung des Steuergehäuses dient. Die pneumatische Abdichtung zwischen Steuergehäuse und Verstärkergehäuse wird bei der vorbekannten Betätigungseinheit durch eine Dichtung realisiert. Als weniger vorteilhaft ist bei dieser Anordnung anzusehen, dass bei Betätigung der Steuergruppe die eben erwähnte Dichtung Reibung erzeugt, die das Ansprechverhalten der Betätigungseinheit beeinträchtigt.

Der Erfindung liegt also die Aufgabe zugrunde, eine Betätigungseinheit der eingangs genannten Gattung dahingehend zu vereinfachen, dass Dichtungen eingespart werden um das Ansprechverhalten und die Dynamik der Betätigungseinheit zu verbessern.

Diese Aufgabe wird erfindungsgemäß dadurch gelöst, dass der Unterdruckdichtsitz mit dem Verstärkergehäuse und der Atmosphärendichtsitz mit der ersten beweglichen Wand in kraftschlüssiger Verbindung steht.

Dabei ist vorzugsgweise vorgesehen, dass der Kraftschluss zwischen Unterdruckdichtsitz und Verstärkergehäuse durch Mittel hergestellt wird, die wenigstens einen Anschlag und einen elektrisch steuerbaren Hubaktuator umfassen.

Außerdem wird vorzugsweise der Kraftschluss zwischen Atmosphärendichtsitz und erster beweglicher Wand durch eine feste Verbindung oder direkten mechanischen Kontakt der genannten Bauteile hergestellt.

Bei einer besonders vorteilhaften Weiterbildung des Erfindungsgegenstandes ist ein weiterer Atmosphärendichtsitz vorgesehen, der mit einem weiteren Ventilkörper zusammenwirkt und bei einer schnellen Betätigung der Steuergruppe wirksam wird. Dabei erfolgt der Kraftschluss zwischen Atmosphärendichtsitz und der ersten beweglichen Wand über den weiteren Atmosphärensitz.

Bei einer besonders vorteilhaften Ausführungsform ist vorgesehen, dass eine Bewegung des Unterdruckdichtsitzes an die Bewegung eines Ankers des elektrisch steuerbaren Hubaktuators gekoppelt ist, der bei einem Betätigungshub den Unterdruckdichtsitz durch Anlage an den Ventilkörper schließt und den Atmosphärendichtsitz durch Abheben des Ventilkörpers öffnet.

Bei einer weiteren vorteilhaften Ausführungsform ist der elektrisch steuerbare Hubaktuator relativ zum Verstärkergehäuse unbeweglich angeordnet.

Eine vorteilhafte Weiterbildung des Erfindungsgegenstandes sieht vor, dass die Bewegung wenigstens eines Atmosphärendichtsitzes an die Bewegung der ersten beweglichen Wand gekoppelt ist.

Bei einer besonders vorteilhaften Ausführungsform ist eine Bremspedalwegsimulationseinrichtung vorgesehen, die federnde und/oder dämpfende und/oder reibende Elemente enthält. Dabei wird die Bremspedalwegsimulationseinrichtung von einem zylindrischen Bauteil aufgenommen, das mit der ersten beweglichen Wand verbunden ist und einen der Atmosphärendichtsitze trägt.

Außerdem ist vorzugsweise im Verstärkergehäuse ein pneumatischer Unterdruckraum vorgesehen, der sich in den Bereich der Steuergruppe erstreckt und mit dem Arbeitsraum verbindbar ist.

Eine weitere vorteilhafte Ausführungsform des Erfindungsgegenstandes sieht vor, dass zwischen dem Verstärkergehäuse und den bewegbaren Teilen der Steuergruppe beziehungsweise zwischen diesen pneumatische Abdichtungen vorgesehen sind, die mit Faltenbälgen oder Schlauchmanschetten realisiert werden.

Es ist vorzugsweise vorgesehen, dass die federnden und/oder dämpfenden und/oder reibenden Elemente kraftübertragungsmäßig zwischen der ersten beweglichen Wand und einer die Steuergruppe betätigenden Kolbenstange angeordnet sind.

Eine vorteilhafte Weiterbildung des Erfindungsgegenstandes sieht vor, dass mindestens zwei Zugkraftübertragungselemente vorgesehen sind, die sich durch das Verstärkergehäuse hindurch erstrecken und einerseits der Befestigung des Hauptbremszylinders am Verstärkergehäuse und andererseits zur Anbringung der Betätigungseinheit an einer Spritzwand des Fahrzeugs dienen.

Außerdem ist vorzugsweise eine Ausrückhülse vorgesehen, die pneumatisch dicht gleitend im Verstärkergehäuse angeordnet ist und über eine Rollmembran mit der ersten beweglichen Wand verbunden ist.

Bei einer besonders vorteilhaften Ausführungsform ist vorgesehen, dass die Bremspedalwegsimulationseinrichtung wirkungsmäßig abschaltbar ist. Dabei ist vorgesehen, dass die wirkungsmäßige Abschaltung der Bremspedalwegsimulationseinrichtung in Abhängigkeit vom Relativweg der ersten beweglichen Wand zum Verstärkergehäuse erfolgt.

Die Erfindung wird nachfolgend anhand von zwei Ausführungsbeispielen im Zusammenhang mit der beiliegenden Zeichnung näher erläutert. In der Zeichnung zeigen:
- Fig.1: eine schematische Darstellung im axialen Querschnitt einer ersten Ausführung der erfindungsgemäßen Betätigungseinheit im unbetätigten Zustand,
- Fig.2: eine zweite Ausführung der erfindungsgemäßen Betätigungseinheit schematisch im unbetätigten Zustand.

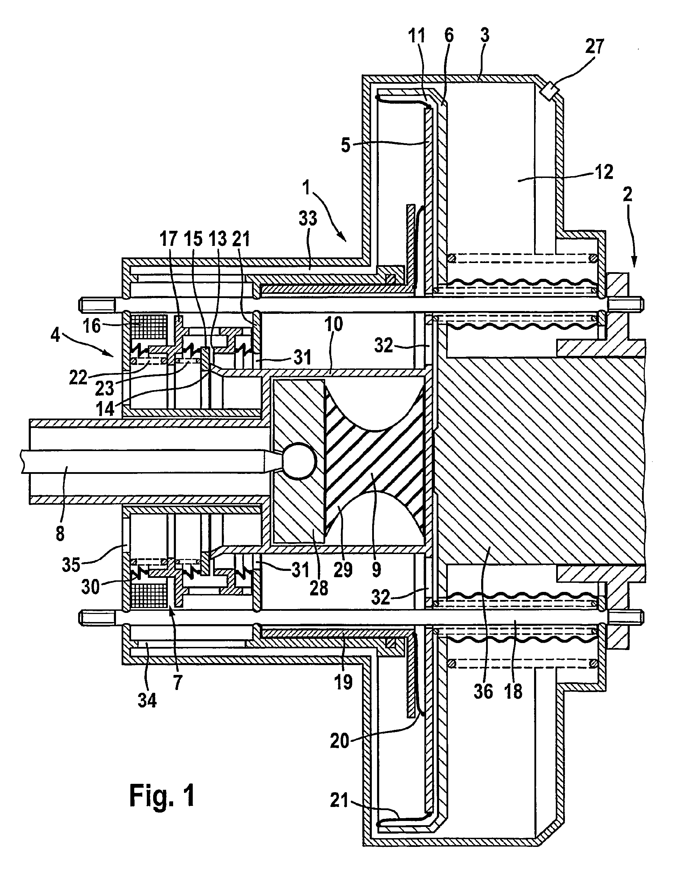

Die in Fig.1 lediglich schematisch dargestellte erfindungsgemäße Betätigungseinheit für eine hydraulische Fahrzeugbremsanlage weist einen pneumatischen Bremskraftverstärker 1 auf, der über eine Kolbenstange 8 mit einem nicht dargestellten Bremspedal verbunden ist. Auf der der Kolbenstange 8 abgewandten Seite des pneumatischen Bremskraftverstärkers 1 ist dem pneumatischen Bremskraftverstärker 1 ein Hauptbremszylinder 2 nachgeschaltet, der in Fig. 1 lediglich teilweise dargestellt ist.

Wie in Fig. 1 dargestellt, weist der pneumatische Bremskraftverstärker 1 in einem Verstärkergehäuse 3 eine erste und eine zweite bewegliche Wand 5, 6 auf, wobei die zweite bewegliche Wand 6 über ein Kraftübertragungsteil 36 mit einem nicht dargestellten Kolben des Hauptbremszylinders 2 in kraftübertragender Verbindung steht. Die beiden beweglichen Wände 5, 6 begrenzen gemeinsam einen Arbeitsraum 11 und sind zu diesem Zweck mit einer Rollmembran 21 druckdicht miteinander verbunden. Der Arbeitsraum 11 ist über Durchbrüche 32, 31, über eine Steuergruppe 4, die nachfolgend noch näher erläutert wird, eine Gehäuseöffnung 34 und einen Unterdruckkanal 33 mit einem im Verstärkergehäuse 3 ausgebildeten pneumatischen Raum 12 verbindbar. Außerdem ist der Arbeitsraum 11 über die eben erwähnte Steuergruppe 4 und über weitere Gehäuseöffnungen 35 mit der Atmosphäre verbindbar. Da der eben erwähnte pneumatische Raum 12 über einen Unterdruckanschluss 27 im Verstärkergehäuse 3 mit einer nicht dargestellten Unterdruckquelle in Verbindung steht, ist der Arbeitsraum 11 durch ein Verbinden mit dem pneumatischen Raum 12 evakuierbar und durch ein Verbinden mit der Atmosphäre belüftbar.

Die erfindungsgemäße Betätigungseinheit weist außerdem zwei Zugkraftübertragungselemente 18 auf, die sich durch das Verstärkergehäuse 3 hindurch erstrecken. Diese Zugkraftübertragungselemente 18 dienen einerseits der Befestigung des Hauptbremszylinders 2 am Verstärkergehäuse 3 und andererseits zur Anbringung der erfindungsgemäßen Betätigungseinheit an einer Spritzwand eines Kraftfahrzeugs.

Die mit dem nicht dargestellten Bremspedal in Verbindung stehende Kolbenstange 8 erstreckt sich in das Verstärkergehäuse 3 hinein und stützt sich über eine Kraftübertragungsplatte 28 und eine Bremspedalwegsimulationseinrichtung 9, deren Funktion später näher erläutert wird, an einem zylindrischen Bauteil 10 ab, das mit der ersten beweglichen Wand 5 fest verbunden ist. Das zylindrische Bauteil 10 trägt einen Atmosphärendichtsitz 14, der mit einem ringförmig ausgebildeten Ventilkörper 15 zusammenwirkt. Mit diesem Ventilkörper 15 wirkt außerdem ein Unterdruckdichtsitz 13 zusammen, der an einem Anker 17 eines elektrisch steuerbaren Hubaktuators 7 ausgebildet ist. Der elektrisch steuerbare Hubaktuator 7 ist in dem in Fig. 1 dargestellten Ausführungsbeispiel als Elektromagnet ausgebildet, der eine Spule 16 aufweist, die unbeweglich im Verstärkergehäuse 3 angeordnet ist. Der eben erwähnte Anker 17 liegt aufgrund der Kraftwirkung einer Feder 22 an einem im Verstärkergehäuse 3 ausgebildeten Anschlag 21 an. Zwischen dem Verstärkergehäuse 3 und dem Anker 17, zwischen dem Anker 17 und dem Ventilkörper 15 sowie zwischen dem Anker 17 und dem Anschlag 21 sind pneumatische Dichtungen vorgesehen, die bei dem in Fig. 1 gezeigten Ausführungsbeispiel als Faltenbälge aus Gummi oder einem ähnlichen Material ausgebildet sind. Alternativ sind als pneumatischen Dichtungen der eben beschriebenen Elemente der Steuergruppe 4 auch Schlauchmanschetten denkbar.

Aufgrund des eben beschriebenen Aufbaus der Steuergruppe 4 ist offensichtlich, dass der Unterdruckdichtsitz 13 mit dem Verstärkergehäuse 3 und der Atmosphärendichtsitz 14 mit der ersten beweglichen Wand 5 in kraftschlüssiger Verbindung steht. Die kraftschlüssige Verbindung des Unterdruckdichtsitzes 13 mit dem Verstärkergehäuse 3 wird dabei einerseits über den im Verstärkergehäuse 3 ausgebildeten Anschlag 21 und andererseits über die gehäusefest angeordnete Spule 16 des Elektromagneten realisiert. Die kraftschlüssige Verbindung zwischen Atmosphärendichtsitz 14 und erster beweglicher Wand 5 wird durch die vorhin erwähnte feste Verbindung zwischen dem zylindrischen Bauteil 10, das den Atmosphärendichtsitz 14 trägt, und der ersten beweglichen Wand 5 realisiert. Damit ist auch die Bewegung des Atmosphärendichtsitzes 14 an die Bewegung der ersten beweglichen Wand 5 gekoppelt.

Das bereits erwähnte zylindrische Bauteil 10, das mit der ersten beweglichen Wand 5 verbunden ist, ist außerdem über eine Rollmembran 21 pneumatisch dicht mit einer Ausrückhülse 19 verbunden, deren Funktion noch näher erläutert wird. Die Ausrückhülse 19 ist pneumatisch dicht gleitend im Verstärkergehäuse 3 angeordnet.

Im Folgenden wird die Funktion der erfindungsgemäßen Betätigungseinheit beschrieben:

Im unbetätigten Zustand des pneumatischen Bremskraftverstärkers 1 ist der Unterdrucksitz 13 geöffnet und der Atmosphärendichtsitz 14 geschlossen und sowohl der pneumatische Raum 12 als auch der Arbeitsraum 11 sind evakuiert. Dieser Zustand ist in Fig. 1 dargestellt. Bei einer Betätigung des nicht dargestellten Bremspedals bewegt die Kolbenstange 8 über die Kraftübertragungsplatte 28 und die Bremspedalwegsimulationseinrichtung 9 das zylindrische Bauteil 10 und damit auch die erste bewegliche Wand 5 in der Zeichnung nach rechts. Als Folge dieser Verschiebung wird der Unterdruckdichtsitz 13 geschlossen, da der durch eine Feder 23 vorgespannte Ventilkörper 15 auf dem Unterdrucksitz zur Anlage kommt. Außerdem löst sich der Atmosphärendichtsitz 14 von dem am Unterdruckdichtsitz 13 angelegten Ventilkörper, wonach Außenluft unter Atmosphärendruck durch die Durchbrüche 31, 32 in den Arbeitsraum 11 einströmen kann. Die Druckdifferenz zwischen dem Arbeitsraum 11 und dem pneumatischen Raum 12 bewirkt nun eine Kraftbeaufschlagung der zweiten beweglichen Wand 6 und damit eine Kraftbeaufschlagung über das Kraftübertragungsteil 36 auf den Hauptbremszylinder 2, wodurch ein für die Betätigung von Radbremsen erforderlicher hydraulischer Druck sowie der damit einhergehende Verfahrweg zur Verfügung gestellt wird.

Gleichzeitig bewirkt die Druckdifferenz, dass die erste Wand 5 in der Zeichnung nach links verschoben wird und der Atmosphärendichtsitz 14 wieder geschlossen wird, sofern sich ein Gleichgewicht zwischen der Betätigungskraft der Kolbenstange 8 und der entgegengesetzt wirkenden Kraft auf die erste Wand 5 eingestellt hat. Der Betätigungsweg der Kolbenstange 8 in der Zeichnung nach rechts wird dabei von der Pedalwegsimulationseinrichtung 9 aufgenommen, die zu diesem Zweck ein federndes und/oder ein dämpfendes Element 29 enthält. Zusätzlich sind zur Erzielung einer angenehmen Pedalcharakteristik reibende Elemente verwendbar. Die eben erwähnten Elemente 29 sind also im Kraftschluss zwischen der Kolbenstange 8 und der ersten beweglichen Wand 5 angeordnet.

Bei einer weiteren Verschiebung der Kolbenstange 8 aufgrund einer weiteren Betätigung des pneumatischen Bremskraftverstärkers 1 wird der Arbeitsraum 11 erneut belüftet. Nach Beendigung der Betätigung des pneumatischen Bremskraftverstärkers 1 wird der Unterdruckdichtsitz 13 geöffnet und der Arbeitsraum 11 über den geöffneten Unterdruckdichtsitz 13, die Gehäuseöffnung 34 und den Unterdruckkanal 33 mit dem pneumatischen Raum 12 verbunden, wodurch der Arbeitsraum 11 evakuiert wird.

Außerdem ist die Betätigungseinheit fremdansteuerbar, d.h. eine Betätigung kann unabhängig vom direkten Willen des Fahrzeugführers oder in Überlagerung einer Fahrerbremsung durchgeführt werden. Dazu ist im wesentlichen der als Elektromagnet ausgeführte elektrisch steuerbare Hubaktuator 7 vorgesehen, dessen Spule 16 bei entsprechender Bestromung den Anker 17 in Fig. 1 nach links zieht. Dabei wird zunächst der Unterdruckdichtsitz 13 geschlossen, indem er an dem Ventilkörper 15 zur Anlage kommt. Anschließend hebt der Anker 17 den Ventilkörper 15 entgegen der Wirkung der Feder 23 vom Atmosphärendichtsitz 14 ab und öffnet diesen. Dadurch wird wiederum die Arbeitskammer 11, wie bereits beschrieben, belüftet und der Hauptbremszylinder 2 betätigt.

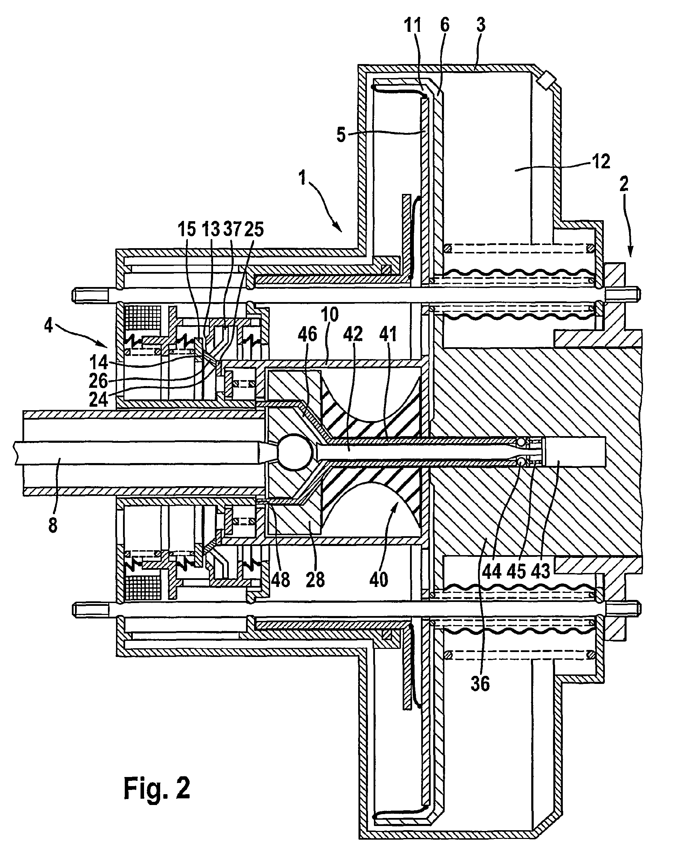

Falls die Unterdruckversorgung ausfallen sollte, muss die Bremspedalwegsimulationseinrichtung 9 wirkungsmäßig abgeschaltet werden, damit die vom Fahrzeugführer aufgebrachte Betätigungsweg nicht in dem federnden oder dämpfenden Element 29 absorbiert wird, sondern den Hauptbremszylinder 2 ohne Unterstützung des pneumatischen Bremskraftverstärkers 1 direkt betätigt. Dazu ist in Fig. 2 ein sogenannter mechanischer Durchgriff 40 vorgesehen, der lediglich exemplarisch die Möglichkeit einer wirkungsmäßigen Abschaltung der Bremspedalwegsimulationseinrichtung 9 darstellen soll. Das in Fig. 2 dargestellte Ausführungsbeispiel weist innerhalb der Kraftübertragungsplatte 28 zwei Kanäle 46 auf, durch welche sich ein Übertragungsmittel 41 erstreckt. Außerdem ist eine zylindrische Ausnehmung 43 im Kraftübertragungsteil 36 vorgesehen. Ein Stößel 42 ist einerseits mit der Kraftübertragungsplatte 28 fest verbunden und ragt andererseits in die zylindrische Ausnehmung 43 im Kraftübertragungsteil 36 hinein. Am in Fig. 2 rechten Ende des Stößels 42 sind Kugeln 44 sowie eine Feder 45 angeordnet, die die Kugeln gegen das eben erwähnte Übertragungsmittel 41 drückt. Wenn bei einem Ausfall der Unterdruckversorgung eine Betätigung des pneumatischen Bremskraftverstärkers 1 erfolgt, so wird sich die Kolbenstange 8 und das zylindrische Bauteil 10 in der Zeichnung nach rechts verschieben. Da kein Unterdruck zur Verfügung steht werden sich die beiden beweglichen Wände 5, 6 nicht auseinander bewegen, sondern gemeinsam nach rechts verschieben. Das Übertragungsmittel 41 wird bei der Verschiebung des zylindrischen Bauteils 10 aufgrund der Wirkung der Feder 45 weiterhin gegen eine Abstützung 48 gedrückt. Infolge der Relativverschiebung des Übertragungsmittels gegen den mit der Kraftübertragungsplatte 28 verbundenen Stößel 42 werden die eben erwähnten Kugeln 44 gegen zwei Schrägen am Stößel 42 gedrückt, bis sie sich schließlich verkeilen und eine Relativbewegung zwischen dem Kraftübertragungsteil 36 und der Kraftübertragungsplatte 28 verhindert wird. Anschließend wird der Hauptbremszylinder 2 direkt vom Fahrzeugführer über das nicht dargestellte Bremspedal betätigt.

Außerdem weist das in Fig. 2 dargestellte Ausführungsbeispiel einen weiteren Atmosphärendichtsitz 24 auf, der mit einem weiteren ringförmigen Ventilkörper 25 zusammenwirkt. Dieser weitere Atmosphärendichtsitz 24 ist für eine weitere Verbesserung der Dynamik vorgesehen. Bei einer schnellen Betätigung der Kolbenstange 8 und damit der Steuergruppe 4 wird der weitere Atmosphärendichtsitz 24 geöffnet und die Arbeitskammer 11 wird schneller belüftet, wonach eine schnellere Reaktion der zweiten beweglichen Wand 6 und damit auch ein schnellerer Druckaufbau im Hauptbremszylinder 2 erfolgt. Zur Realisierung des weiteren Atmosphärendichtsitzes 24 ist ein Ring 26 vorgesehen, der zwischen dem zylindrischen Bauteil 10 und dem Ventilkörper 15 angeordnet ist und einerseits den Atmosphärendichtsitz 14 trägt, der mit dem Ventilkörper 15 zusammenwirkt, und andererseits den weiteren Atmosphärendichtsitz 24 trägt, der mit dem weiteren Ventilkörper 25 zusammenwirkt. Der weitere Ventilkörper 25 ist dabei mit dem zylindrischen Bauteil 10 verbunden. Der eben erwähnte Ring 26 ist dabei derart ausgebildet, dass die Druckdifferenz zwischen Unterdruck im Verstärkergehäuse 3 und Atmosphärendruck der Umgebung auf den Ring 26 wirkt und ihn gegen den weiteren Ventilkörper 25 drückt. Außerdem weist der Ring 26 Ausleger 37 auf, die, ohne Beeinträchtigung der pneumatischen Verbindung von der Steuergruppe 4 zur Arbeitskammer 11 den Ring 26 führen und seine Bewegung in der Zeichnung nach rechts begrenzen.

Bei der in Fig. 2 dargestellten Ausführungsform erfolgt der Kraftschluss zwischen Atmosphärendichtsitz 14 und der ersten beweglichen Wand 5 über den Ring 26 und den weiteren Atmosphärendichtsitz 24 und dementsprechend ist die Bewegung des weiteren Atmosphärendichtsitzes 24 an die Bewegung der ersten beweglichen Wand 5 gekoppelt.

Vorteilhaft bei der gesamten Anordnung ist, dass keine spürbaren Rückwirkungen auf das nicht dargestellte Bremspedal entstehen, wenn etwa eine Blockierschutzregelung vorgenommen wird.

## Patentansprüche

1. Betätigungseinheit für eine hydraulische Fahrzeugbremsanlage, bestehend aus einem pneumatischen Bremskraftverstärker (1) und einem dem pneumatischen Bremskraftverstärker (1) nachgeschalteten Hauptbremszylinder (2), wobei der pneumatische Bremskraftverstärker (1) in einem Verstärkergehäuse (3) eine erste bewegliche Wand (5) und eine zweite bewegliche Wand (6) aufweist, die in kraftübertragender Verbindung mit einem Kolben des Hauptbremszylinder (2) steht, wobei die beweglichen Wände einen Arbeitsraum (11) begrenzen, der mit Hilfe einer Steuergruppe (4) evakuierbar oder belüftbar ist, die einen Unterdruckdichtsitz (13) und einen Atmosphärendichtsitz (14) sowie einen mit den Dichtsitzen (13, 14) zusammenwirkenden Ventilkörper (15) aufweist, **dadurch gekennzeichnet, dass** der Unterdruckdichtsitz (13) mit dem Verstärkergehäuse (3) und der Atmosphärendichtsitz (14) mit der ersten beweglichen Wand (5) in kraftschlüssiger Verbindung steht.

2. Betätigungseinheit nach Anspruch 1, **dadurch gekennzeichnet, dass** der Kraftschluss zwischen Unterdruckdichtsitz (13) und Verstärkergehäuse (3) durch Mittel hergestellt wird, die wenigstens einen Anschlag (21) und einen elektrisch steuerbaren Hubaktuator (7) umfassen.

3. Betätigungseinheit nach Anspruch 1 oder 2, **dadurch gekennzeichnet, dass** der Kraftschluss zwischen Atmosphärendichtsitz (14) und erster beweglicher Wand (5) durch eine feste Verbindung oder direkten mechanischen Kontakt der genannten Bauteile hergestellt wird.

4. Betätigungseinheit nach einem der Ansprüche 1 bis 3, **dadurch gekennzeichnet, dass** ein weiterer Atmosphärendichtsitz (24) vorgesehen ist, der mit einem weiteren Ventilkörper (25) zusammenwirkt und bei einer schnellen Betätigung der Steuergruppe (4) wirksam wird.

5. Betätigungseinheit nach Anspruch 4, **dadurch gekennzeichnet, dass** der Kraftschluss zwischen Atmosphärendichtsitz (14) und der ersten beweglichen Wand (5) über den weiteren Atmosphärensitz (24) erfolgt.

6. Betätigungseinheit nach wenigstens Anspruch 2, **dadurch gekennzeichnet, dass** die Bewegung des Unterdruckdichtsitzes (13) an die Bewegung eines Ankers (17) des elektrisch steuerbaren Hubaktuators (7) gekoppelt ist, der bei einem Betätigungshub den Unterdruckdichtsitz (13) durch Anlage an den Ventilkörper (15) schließt und den Atmosphärendichtsitz (14) durch Abheben des Ventilkörpers (15) öffnet.

7. Betätigungseinheit nach Anspruch 6, **dadurch gekennzeichnet, dass** der elektrisch steuerbare Hubaktuator (7) relativ zum Verstärkergehäuse (3) unbeweglich angeordnet ist.

8. Betätigungseinheit nach einem der Ansprüche 1 bis 5, **dadurch gekennzeichnet, dass** die Bewegung wenigstens eines Atmosphärendichtsitzes (14, 24) an die Bewegung der ersten beweglichen Wand (5) gekoppelt ist.

9. Betätigungseinheit nach einem der Ansprüche 1 bis 8, **dadurch gekennzeichnet, dass** eine Bremspedalwegsimulationseinrichtung (9) vorgesehen ist, die federnde und/oder dämpfende und/oder reibende Elemente enthält.

10. Betätigungseinheit nach Anspruch 9, **dadurch gekennzeichnet, dass** die Bremspedalwegsimulationseinrichtung (9) von einem zylindrischen Bauteil (10) aufgenommen wird, das mit der ersten beweglichen Wand (5) verbunden ist und einen der Atmosphärendichtsitze (14, 24) trägt.

11. Betätigungseinheit nach einem der vorhergehenden Ansprüche, **dadurch gekennzeichnet, dass** im Verstärkergehäuse (3) ein pneumatischer Unterdruckraum (12) vorgesehen ist, der sich in den Bereich der Steuergruppe (4) erstreckt und mit dem Arbeitsraum (11) verbindbar ist.

12. Betätigungseinheit nach einem der vorhergehenden Ansprüche, **dadurch gekennzeichnet, dass** zwischen dem Verstärkergehäuse (3) und den bewegbaren Teilen der Steuergruppe (4) beziehungsweise zwischen diesen pneumatische Abdichtungen vorgesehen sind, die mit Faltenbälgen (30) oder Schlauchmanschetten realisiert werden.

13. Betätigungseinheit nach Anspruch 9, **dadurch gekennzeichnet, dass** die federnden und/oder dämpfenden und/oder reibenden Elemente (29) kraftübertragungsmäßig zwischen der ersten beweglichen Wand (5) und einer die Steuergruppe (4) betätigenden Kolbenstange (8) angeordnet sind.

14. Betätigungseinheit nach einem der vorhergehenden Ansprüche, **dadurch gekennzeichnet, dass** mindestens zwei Zugkraftübertragungselemente (18) vorgesehen sind, die sich durch das Verstärkergehäuse (3) hindurch erstrecken und einerseits der Befestigung des Hauptbremszylinders (2) am Verstärkergehäuse (3) und andererseits zur Anbringung der Betätigungseinheit an einer Spritzwand des Fahrzeugs dienen.

15. Betätigungseinheit nach einem der vorhergehenden Ansprüche, **dadurch gekennzeichnet, dass** eine Ausrückhülse (19) vorgesehen ist, die pneumatisch dicht gleitend im Verstärkergehäuse (3) angeordnet ist und über eine Rollmembran (20) mit der ersten beweglichen Wand (5) verbunden ist.

16. Betätigungseinheit nach wenigstens Anspruch 9, 10 oder 13, **dadurch gekennzeichnet, dass** die Bremspedalwegsimulationseinrichtung (9) wirkungsmäßig abschaltbar ist.

17. Betätigungseinheit nach Anspruch 16, **dadurch gekennzeichnet, dass** die wirkungsmäßige Abschaltung der Bremspedalwegsimulationseinrichtung (9) in Abhängigkeit vom Relativweg der ersten beweglichen Wand (5) zum Verstärkergehäuse (3) erfolgt.

## Claims

1. Actuation unit for a hydraulic vehicle brake system, comprising a pneumatic brake booster (1) and a master brake cylinder (2) connected downstream of the pneumatic brake booster (1), with the pneumatic brake booster (1), in a booster housing (3), having a first movable wall (5) and a second movable wall (6) being in a force-transmitting connection to a piston of the master brake cylinder (2), with the movable walls delimiting a working chamber (11) which can be evacuated or aerated by means of a control group (4) that is composed of a vacuum sealing seat (13), an atmospheric sealing seat (14), and a valve member (15) cooperating with the sealing seats (13, 14),
**characterized in that** the vacuum sealing seat (13) is in operative engagement with the booster housing (3), while the atmospheric sealing seat (14) is in operative engagement with the first movable wall (5).

2. Actuation unit as claimed in claim 1,
**characterized in that** the frictional connection between the vacuum sealing seat (13) and the booster housing (3) is established by means comprising at least one stop (21) and an electrically controllable stroke actuator (7).

3. Actuation unit as claimed in claim 1 or 2,
**characterized in that** the frictional connection between the atmospheric sealing seat (14) and the first movable wall (5) is established by a fixed coupling or a direct mechanical contact of the mentioned components.

4. Actuation unit as claimed in any one of claims 1 to 3,
**characterized in that** an additional atmospheric sealing seat (24) is provided, which interacts with an additional valve member (25) and becomes active when the control group (4) is quickly actuated.

5. Actuation unit as claimed in claim 4,
**characterized in that** the frictional connection between the atmospheric sealing seat (14) and the first movable wall (5) occurs by way of the additional sealing seat (24).

6. Actuation unit as claimed in at least claim 2,
**characterized in that** the movement of the vacuum sealing seat (13) is coupled to the movement of an armature (17) of the electrically controllable stroke actuator (7), which, in the event of an actuation stroke, closes the vacuum sealing seat (13) by abutment on the valve member (15) and opens the atmospheric sealing seat (14) by lifting the valve member (15).

7. Actuation unit as claimed in claim 6,
**characterized in that** the electrically controllable stroke actuator (7) is arranged in an immovable way relative to the booster housing (3).

8. Actuation unit as claimed in any one of claims 1 to 5,
**characterized in that** the movement of at least one atmospheric sealing seat (14, 24) is coupled to the movement of the first movable wall (5).

9. Actuation unit as claimed in any one of claims 1 to 8,
**characterized in that** a brake pedal travel simulation device (9) is provided, comprising resilient and/or damping and/or frictional elements.

10. Actuation unit as claimed in claim 9,
**characterized in that** the brake pedal travel simulation device (9) is accommodated in a cylindrical component (10), which is connected to the first movable wall (5) and carries one of the atmospheric sealing seats (14, 24).

11. Actuation unit as claimed in any one of the preceding claims,
**characterized in that** a pneumatic vacuum chamber (12) is provided in the booster housing (3), extending into the area of the control group (4) and being connectible to the working chamber (11).

12. Actuation unit as claimed in any one of the preceding claims,
**characterized in that** pneumatic sealants are provided between the booster housing (3) and the movable parts of the control group (4) or between these, the sealants being configured as pleated bellows (30) or hose collars.

13. Actuation unit as claimed in claim 9,
**characterized in that** the resilient and/or damping and/or frictional elements (29) are arranged between the first movable wall (5) and a piston rod (8) actuating the control group (4) in terms of force transmission.

14. Actuation unit as claimed in any one of the preceding claims,
**characterized in that** at least two tensile-force transmitting elements (18) are provided, which extend through the booster housing (3) and are used to attach the master brake cylinder (2) to the booster housing (3), on the one hand, and to mount the actuation unit on a splashboard of the vehicle, on the other hand.

15. Actuation unit as claimed in any one of the preceding claims,
**characterized in that** there is provision of a disengaging sleeve (19) which is slidingly arranged in the booster housing (3) in a pneumatically seal-tight manner and is connected to the first movable wall (5) by way of a rolling diaphragm (20).

16. Actuation unit as claimed in at least claim 9, 10 or 13,
**characterized in that** the brake pedal travel simulation device (9) is disabled in terms of effect.

17. Actuation unit as claimed in claim 16,
**characterized in that** the brake pedal travel simulation device (9) is disabled in terms of effect depending on the travel of the first movable wall (5) relative to the booster housing (3).

## Revendications

1. Unité d'actionnement pour un système de frein hydraulique, comportant un appareil pneumatique (1) à amplifier la force de freinage et un maître-cylindre de frein (2) intercalé en arrière de l'appareil d'amplificateur (1) pneumatique, l'appareil d'amplificateur (1) pneumatique comportant dans son boîtier (3) une paroi (5) amovible première et une paroi (6) amovible secondaire en communication à transmettre de force avec un piston du maître-cylindre de frein, les parois amovibles limitant un espace de manoeuvre (11) évacuable ou ventilable par l'intermédiaire d'une groupe à commande (4) comportant un siège d'étanchéité de vide (13) et un siège d'étanchéité atmosphérique (14) et un corps de soupape (15) coopérant avec les sièges d'étanchéité (13, 14), **caractérisé, en ce que** le siège d'étanchéité de vide (13) est en communication solidaire avec le boitier de l'amplificateur tandis que le siège d'étanchéité atmosphérique (14) est en communication avec la paroi (5) amovible.

2. L'unité d'actionnnement selon la revendication 1, **caractérisé en ce que** le contact de frottement entre le siège d'étancheité de vide (13) et le boitier de l'amplificateur (13) est établi par l'intermédiaire des moyens formé au moins d'une butée (21) et d'un mécanisme élévateur (7) commandé de manière électrique.

3. L'unité d'actionnnement selon les revendications 1 ou 2, **caractérisé en ce que** le contact de frottement entre le siège d'étanchéité atmosphérique (14) et la paroi amovible première (5) est établi par l'intermédiaire d'une connexion ferme ou par l'intermédiaire d'un contact mécanique directe entre lesdits éléments de construction.

4. L'unité d'actionnement selon les revendications 1 à 3, **caractérisé en ce qu'**un autre siège d'étanchéité atmosphérique (24) est prévu coopérant avec un autre corps de soupape (25) et étant actif en cas d'opération rapide de la groupe de commande (4).

5. L'unité d'actionnnement selon la revendication 4, **caractérisé en ce que** le contact de frottement entre le siège d'étanchéité atmosphérique (14) et la paroi amovible première (9) se fait par l'intermédiaire d'un autre siège atmosphérique (24).

6. L'unité d'actionnement au moins selon la revendication 2, **caractérisé en ce que** le mouvement du siège d'étancheité de vide (13) est dépendant du mouvement d'une ancre (17) de l'élévateur (7) commandé de manière électrique et fermant le siège d'étanchéité de vide (13) pendant d'une action d'élévation en se mettant contre le corps de soupape (15), et ouvrant le siège d'étanchéité atmosphérique (14) en élévant le corps de soupape.

7. L'unité d'actionnnement au moins selon la revendication 6, **caractérisé en ce que** l'élévateur (7) commandé de manière électrique est fixe relatif au boîtier de l'amplificateur (3).

8. L'unité d'actionnement selon les revendications 1 à 5, **caractérisé en ce que** le mouvement d'un siège d'étanchéité atmosphérique (14, 24) est dépendant du mouvement de la paroi (5) amovible première.

9. L'unité d'actionnement selon l'une des revendications 1 à 8, **caractérisé en ce qu'**un mécanisme (9) à simuler la distance de la pédale de frein est prévu, comportant des éléments élastiques et/ou amortisseurs et/ou frottoirs.

10. L'unité d'actionnement selon la revendication 9, **caractérisé en ce que** le mécanisme à simuler la distance de la pédale de frein (10) est receuilli par un élément (9) cylindrique raccordé à la paraoi (5) amovible première et portant l'un des sièges d'étanchéité atmosphériques (14, 24).

11. L'unité d'actionnement selon l'une des revendications précédentes, **caractérisé en ce qu'**un espace de vide (12) pneumatique est prévu dans le boîtier de l'amplificateur (3), s'étendant dans la region de la groupe de commande (4) et étant en communication avec l'espace de manoeuvre (11).

12. L'unité d'actionnement selon l'une des revendications précédentes, **caractérisé en ce** des garnitures pneumatiques sont prévues entre le boîtier de l'amplificateur (3) et les parties amovibles de la groupe de commande (4) respectivement entre lesdites éléments qui sont réalisés par des accordéons (30) ou des coupelles tubulaires.

13. L'unité d'actionnement selon la revendication 9, **caractérisé en ce que** les éléments (29) élastiques et/ou amortisseurs et/ou frottoirs sont disposés de manière transmettant de force entre la paroi (5) amovible première et une tige de piston (8) actionnant la groupe de commande (4).

14. L'unité d'actionnement selon l'une des revendications précédentes, **caractérisé en ce qu'**au moins deux éléments (18) transmettant de force de traction s'étendent à travers du boîtier de l'amplificateur (3) et servent d'une part à fixer le maître-cylindre de frein (2) au boîtier de l'amplificateur (3) et d'autre part à disposer l'unité d'actionnement à la garde-crotte de la véhicule.

15. L'unité d'actionnment selon l'une des revendications précédentes, **caractérisé en ce qu'**un manchon de débrayage (19) est prévu dans le boîtier de l'amplificateur (3) glissant de manière pneumatiquement étanche et étant relié par l'intermédiaire d'une membrane rouleau (20) à la paroi amovible première (5).

16. L'unité d'actionnement au moins selon les revendications 9, 10 ou 13, **caractérisé en ce que** le mécanisme (9) à simuler la distance de frein de la pédale est débrayable.

17. L'unité d'actionnement selon la revendication 16, **caractérisé en ce que** le débrayage du mécanisme (9) à simuler la distance de frein de la pédale est effectué en dépendance de la distance relative de la paroi (5) amovible première au boîtier de l'amplificateur (3).
